# EUROPEAN PATENT APPLICATION

(11) **EP 4 223 788 A1**
(43) Date of publication of application: **09.08.2023**
(21) Application number: 21875925.6
(22) Date of filing: 26.07.2021
(51) Int. Cl.: C08F 6/00, B01D 53/04

(54) **METHOD FOR RECOVERING SOLVENT AND UNREACTED MATERIAL IN FINISHER FOR POLYOLEFIN ELASTOMER PREPARATION PROCESS**

(30) Priority: 29.09.2020 KR 20200127118
(71) Applicant: Hanwha TotalEnergies Petrochemical Co., Ltd., Seosan-si, Chungcheongnam-do 31900 (KR)
(72) Inventor: PARK, Chan Ho, Seosan-si, Chungcheongnam-do 31900 (KR); KO, Min Su, Seosan-si, Chungcheongnam-do 31900 (KR)
(74) Representative: Patentwerk B.V.
(86) International application number: PCT/KR2021/009670
(87) International publication number: WO 2022/071650

(57) **Abstract**

The present invention relates to a technique for recovering a solvent and an unreacted material in an extruder (finisher) for a polyolefin elastomer (POE) preparation process, wherein the solvent and the unreacted material are maximally recovered with energy minimization through a recovery process of hydrocarbons (HCs) removed from a product in the extruder (finisher) for the POE preparation process, and thus are reused in the polyolefin elastomer preparation process.

## Description

### TECHNICAL FIELD

The present invention relates to a method for recovering a solvent and an unreacted material in a finisher for a polyolefin elastomer (POE) preparation process, the method recovering a solvent and an unreacted material in a finisher of a polyolefin elastomer such as ethylene-octene rubber (EOR) and ethylene-butene rubber (EBR), wherein a process is added in which water is injected into the finisher to recover the unreacted material and the solvent from the polyolefin elastomer, and flow for removing light materials is added to separate the water and hydrocarbons, so that the amount of materials discharged to the atmosphere during the process is minimized and the efficiency of the process is improved.

### BACKGROUND ART

A polyolefin elastomer is a copolymer of ethylene and alpha-olefin having a low density among polyolefin-based products, and exhibits characteristics such as differentiated impact reinforcement, high elasticity, and low heat sealing temperatures, and thus is used in automotive interior and exterior materials, sound insulation materials, footwear products, food films, encapsulation materials, and the like.

In order to prepare the POE as described above, a metallocene catalyst has been mainly used, and in addition, research has been conducted to improve the yield or efficiency of a POE preparation process by developing a Ziegler-Natta-based catalyst or by expanding factories, but there has been room for improvement in terms of the cost of raw materials and process operation and the efficiency of using the raw materials.

The POE process is mainly composed of two devolatilizers and one finisher (or extruder), and a solvent and an unreacted material are vaporized and discharged during the process. However, by raising the temperature and reducing the pressure to a predetermined pressure before entering a primary devolatilizer having a relatively high pressure, the largest amount of the solvent and the unreacted material are separated and discharged, and the material composition of a relatively light material such as ethylene is exhibited high. In a secondary devolatilizer, by substantially lowering the operating pressure, the solvent and the unreacted material (hydrocarbon) captured or dissolved in a polyolefin elastomer having a high viscosity are separated and discharged. Accordingly, the polyolefin elastomer is sent to an extruder leaving approximately 3 to less than 20 wt% of the solvent and the unreacted material.

Typically, in the POE process as described above, when an extruder is used, a considerable amount of hydrocarbons must be removed in the secondary devolatilizer so as to meet a content required of volatile organic compounds (VOCs) in a final product by including a process in which hydrocarbons are partially removed during a process of raising the temperature in the extruder and making pellets. As such, when a considerable amount of hydrocarbons is separated in the secondary devolatilizer as described above, viscosity is greatly increased in flow, resulting in a fluidity limitation, and when a pressure reduction process is operated to remove volatile organic compounds in the extruder, there is a problem in that a product is discolored due to air inflow. Recently, in order to solve the limitation, a finisher for injecting water or steam into an extruder may be used to allow the role of the extruder to be efficiently performed and hydrocarbons (solvent and unreacted material), which are volatile organic compounds, may be separated from a polyolefin elastomer. Therefore, even when the unreacted material is removed only up to 80 to 95 wt% of the POE content so as to secure fluidity at an outlet of the secondary devolatilizer, the finisher may include the solvent and the unreacted material (VOC) in an amount of 500 ppm or less in a final product, and also, there is an advantage in that discoloration due to air inflow does not occur due to the operation in a sealed state. However, compared to an extruder, the removal amount of hydrocarbons is increased, but it is disadvantageous in terms of reusing the hydrocarbons separated from a product due to the introduction of water or steam introduction and decompression.

When a typical extruder is used, there is a small number of hydrocarbons to be separated, so that the hydrocarbons are removed by air inflow, and a solvent and an unreacted material removed are reused or discarded. However, in the case of a finisher, the amount of hydrocarbons separated from a product is large, so that when the hydrocarbons are not reused, a considerable amount of the hydrocarbons is wasted, which causes an increase in operating costs.

### DISCLOSURE OF THE INVENTION

### TECHNICAL PROBLEM

An object of the present invention is to provide a technique for reusing hydrocarbons (HCs) in a POE preparation process while solving problems occurring in an extruder of a POE preparation process of the prior art and minimizing energy through a recovery process of hydrocarbons (HCs) separated from a product in a finisher.

### TECHNICAL SOLUTION

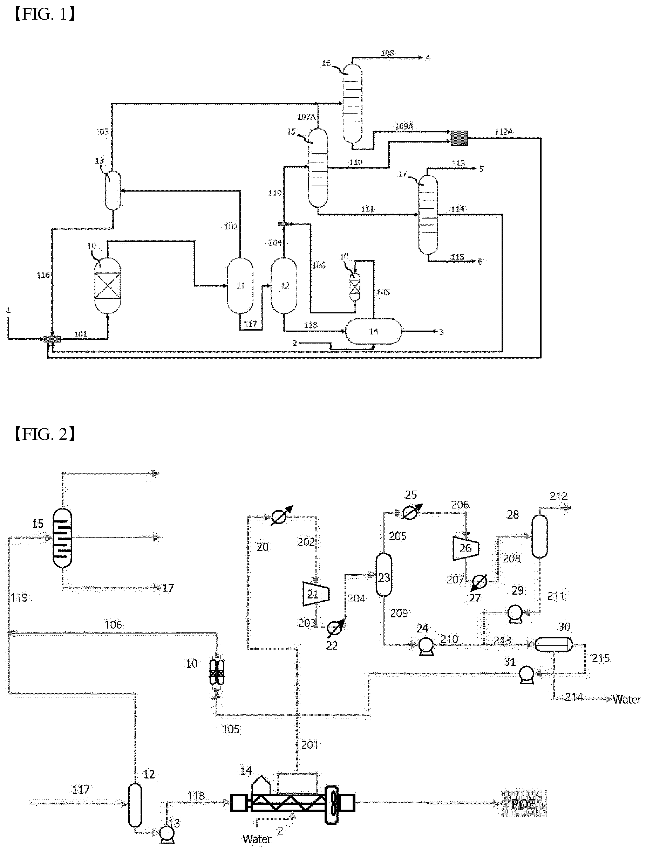

FIG. 1 is a flowchart of a process for preparing POEs. Referring to FIG. 1, the process includes a reactor 10 to which a solvent, feedstock 1, and a recirculation flow are supplied, a primary devolatilizer 11 which devolatilizes a product discharged from the reactor 10 to remove an unreacted material (primary devolatilization recovery flow 102), and discharges the remainder (primary devolatilization preparation flow 117), a secondary devolatilizer 12 which devolatilizes the first devolatilization preparation flow 117 discharged from the first devolatilizer 11 to further remove an unreacted material (secondary devolatilization preparation flow 104), and discharges the remainder (secondary devolatilization preparation flow 118), a finisher in which water 2 is used to scrub the secondary devolatilization preparation flow 118 discharged from the secondary devolatilizer 12 so that an unreacted material and water 105 are vaporized and a polymer product 3 remains, and a flash drum 13 which recovers the remainder 116 to the reactor 10. In addition, the method may further include an adsorption column 10 which removes water from the unreacted material and the water 105 removed in the finisher 14 and discharges the remainder (finisher reaction treatment flow 106), a primary distillation column 15 which distills the secondary devolatilization circulation flow 104 removed from the secondary devolatilizer 12 and the finisher reaction treatment flow 106 discharged from the adsorption column 10 to recover flow 110 separated from a middle portion thereof to the reactor 10, a secondary distillation column 16 which distills impurity removal flow 103 removed from the flash drum 13 and flow 107A separated from an upper portion of the primary distillation column 15 to recover flow 109A separated from a lower portion thereof to the reactor 10, and a tertiary distillation column 17 which distills flow 111 separated from the lower portion of the primary distillation column 15 to recover flow 114 separated from a middle portion thereof to the reactor 10. In this case, if the feedstock 1 is a solvent, ethylene, and a material having a boiling point higher than that of the solvent, for example, 1-octene, the recirculation flow is composed of flow 112A (including a C6 compound) including the flow 114 (including 1-octene) separated from the middle portion of the tertiary distillation column 17 by injecting the flow 111 separated from the lower portion of the primary distillation column 15 into the tertiary distillation column 17, the flow 110 separated from the middle portion of the first distillation column 15, and the flow 109A separated from the lower portion of the secondary distillation column 16 by injecting the flow 107A separated from the upper portion of the primary distillation column 15 into the secondary distillation column 16. On the other hand, when the feedstock 1 is a solvent, ethylene, and a material having a boiling point lower than that of the solvent, for example, 1-butene, the recirculation flow is composed of the flow 110 separated from the middle portion of the first distillation column 15, and the flow 109A separated from the lower portion of the secondary distillation column 16 by injecting the flow 107A separated from the upper portion of the primary distillation column 15 into the secondary distillation column 16.

In order to achieve the above object, in the present invention, the flow 118 of a mixture of a polyolefin elastomer, a solvent, and an unreacted material are introduced together with the purified water 2 into the finisher 14 operated under a high temperature and a reduced pressure, so that the water, the solvent and the unreacted material are separated from a polyolefin polymer having a high viscosity and then discharged as gas phase flow 105 from an upper surface of the finisher. The flow 105 is pressurized 21, 26, 24, and 29 and cooled 20, 22, and 27 to have two liquid phases, and water and hydrocarbons are separated in a device 30 for separating the two liquid phases. Flow 214 with a large amount of moisture is either discarded or introduced into the finisher 14 to be recirculated. The flow 106 in which hydrocarbon flow 215 from which moisture has been removed is pressurized 31 and then passed through the adsorption column 10 so that moisture is controlled to be 1 ppm or less is introduced into the primary distillation column 15 of a solvent separation and purification process like the upper flow 104 of the secondary devolatilizer 12.

As an example, a method for recovering a solvent and an unreacted material in a finisher for a polyolefin elastomer preparation process according to an embodiment of the present invention may include a first step of injecting water into a finisher 14 to vaporize the water at a high temperature and a low pressure, thereby removing a solvent and an unreacted material from a polyolefin elastomer, a second step of liquefying all of flow 201 vaporized in the finisher 14, a third step of separating the liquefied flow into water and hydrocarbons by using a liquid-liquid separator 30, a fourth step of removing moisture in the separated hydrocarbons through an adsorption column 10, and a fifth step of transferring the hydrocarbons from which the moisture is removed to a distillation column 15.

In addition, the second step may include the steps of cooling the flow 201 vaporized in the finisher 14, pressurizing flow 202 cooled by using a first compressor 21, cooling flow 203 pressurized by the first compressor 21, and supplying the cooled flow to a first gas-liquid separator 23, heating gas phase flow 205 of the first gas-liquid separator 23, and pressurizing liquid phase flow 209, pressurizing, by using a second compressor 26, flow 206 separated by the first gas-liquid separator 23 and heated, cooling flow 207 pressurized by the second compressor 26, and supplying the cooled flow to a second vapor-liquid separator 28, removing ethylene and ethane components having relatively low boiling points of the second gas-liquid separator 28 by gas phase flow 212, and pressurizing liquid phase flow 211 having a higher boiling point than the ethylene and ethane components, and supplying flow 210 separated by the first gas-liquid separator 23 and pressurized and flow separated by second gas-liquid separator 28 and pressurized to the liquid-liquid separator 30.

In addition, the second step may include liquefying, by using one or more heat exchangers 20, the flow 201 vaporized in the finisher 14, and pressurizing the liquefied flow 203 and supplying the pressurized flow to the liquid-liquid separator 30.

In addition, one or more compressors or blowers may be used to pressurize the flow 201 vaporized in the finisher 14.

In addition, a sealed liquid-liquid separator or a three-phase separator (gas-liquid-liquid separator) may be used as the liquid-liquid separator 30.

In addition, when the sealed liquid-liquid separator or the gas-liquid-liquid separator is used, an inert gas may be injected to suppress the air inflow.

In addition, at the time of the introduction into the liquid-liquid separator 30, heating may be performed to prevent water from freezing.

In addition, a component having a relatively low boiling point may be removed by gas phase flow by using a gas-liquid-liquid separator as the liquid-liquid separator 30.

In addition, flow 214 in which the water separated from the liquid-liquid separator 30 is rich may be recirculated 2 to the finisher after solids of the flow are removed with a filter.

In addition, the adsorption column 10 may include at least one of molecular sieve, zeolite, and silica gel as an adsorbent.

### ADVANTAGEOUS EFFECTS

As described above, the method for recovering a solvent and an unreacted material in a finisher for a polyolefin elastomer preparation process of the present invention is to improve a method for recovering a solvent and an unreacted material in a finisher which injects water or steam into an extruder instead of an extruder of a typical POE process, wherein hydrocarbons are efficiently separated without inflow of air such that hydrocarbons (unreacted material and solvent) are less than 500 ppm in a final product, and then hydrocarbons are separated from the separated hydrocarbons and water such that energy is minimized and transferred to a process of purifying a solvent, unreacted monomers, and comonomers to be reused in a POE preparation process, so that operating costs may be reduced.

### BRIEF DESCRIPTION OF THE DRAWINGS

FIG. 1 is an overall flowchart of a preparation process using 1-octene as a copolymer in a POE preparation process.
FIGS. 2 and 3 are flowcharts of a hydrocarbon recovery process in a finisher used as an embodiment of the present invention.
FIGS. 4 to 6 are flowcharts of a hydrocarbon recovery process in a finisher used as a comparative embodiment of the present invention.

### BEST MODE FOR CARRYING OUT THE INVENTION

Hereinafter, specific details for carrying out a process for recovering a solvent and an unreacted material in an extruder for a polyolefin elastomer preparation process according to the present invention are as follows, but the present invention is not limited to a finisher for preparing POEs. In addition, unless otherwise defined, all technical and scientific terms used herein have the same meaning as commonly understood by those skilled in the art to which the present invention belongs, and in general, the nomenclature and method used herein are those well known and commonly used in the art.

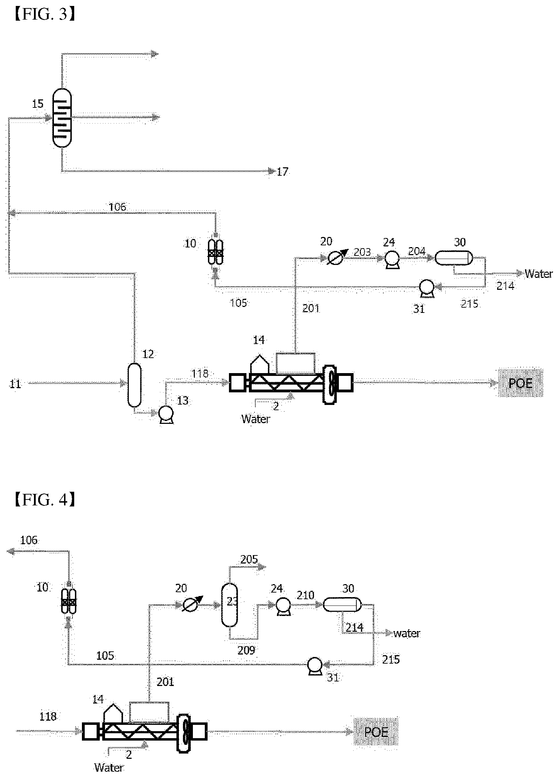

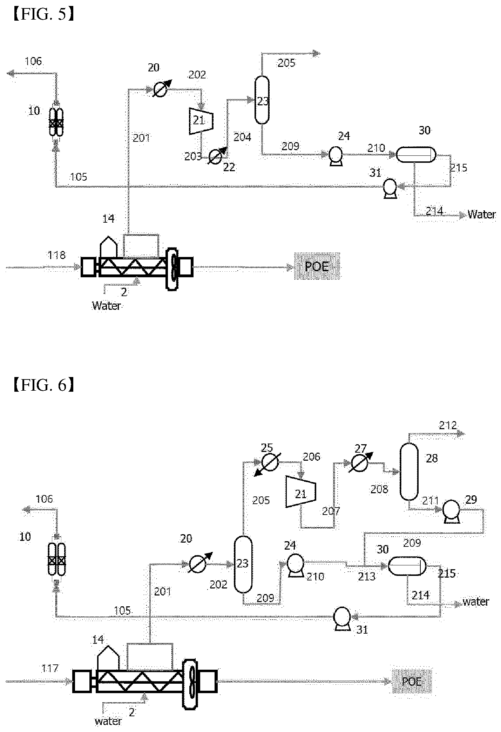

FIGS. 2 and 3 are processes for recovering most of hydrocarbons separated in the finisher 14, and FIGS. 4 and 6 are processes for recovering only a portion of hydrocarbons separated in the finisher 14. In addition, by using cooling water, which is a utility having a low energy level, the process of FIG. 2 requires a smaller amount of refrigeration capacity required for liquefaction to recover the same amount of hydrocarbons than the process of FIG. 3. Accordingly, the process of FIG. 2 requires less actual investment.

FIG. 2 is a flowchart of a hydrocarbon recovery process in the finisher 14 used as an embodiment of the present invention. The finisher 14 may be operated at a high temperature (e.g., 130 to 250°C, suitably at a temperature 30°C or more higher than boiling points of a solvent and an unreacted material at an operating pressure of the finisher 14) and under reduced pressure (less than 1 atm, preferably 10 to 500 torr). At this time, gas phase flow (i.e., vaporized flow) 201 of hydrocarbons separated together with water from a final product in the finisher 14 is cooled by using a heat exchanger 20, and cooled flow 202 is pressurized by using a compressor 21, and pressurized flow 203 is cooled by using a heat exchanger 22, and then cooled flow 204 is introduced into a gas-liquid separator 23. Gas phase flow 205 of the gas-liquid separator 23 is slightly heated by using a heat exchanger 25, and heated flow 206 is pressurized by using a second compressor 26, and pressurized flow 207 is cooled by using a heat exchanger 27, and then cooled flow 208 is injected into a gas-liquid separator 28. Ethylene and ethane components of the gas-liquid separator 28 which have relatively low boiling points are removed by gas phase flow 212, and flow 211 having a higher boiling point than the ethylene and ethane components are pressurized by using a pump 29. Meanwhile, lower flow 209 of the gas-liquid separator 23 is pressurized by using a pump 24. Accordingly, flow separated by the gas-liquid separator 28 and pressurized by the pump 29 and flow 210 separated by the gas-liquid separator 23 and pressurized by the pump 24 are introduced together into a liquid-liquid separator 30. After water and hydrocarbons are separated in the liquid-liquid separator 30, flow 214 having a relatively large amount of water is either treated as wastewater, or treated with a filter and then recirculated 2 to the finisher 14, and flow 215 having a relatively large amount of hydrocarbons is pressurized using a pump 31 to remove a trace amount of moisture in an adsorption column 10, and flow 106 of 0.1 ppm or less is introduced into a primary distillation column 15 of an SRU process of POE.

FIG. 3 is a flowchart of a hydrocarbon recovery process in the finisher 14 used as an embodiment of the present invention. The finisher 14 may be operated at a high temperature (e.g., 130 to 250°C, suitably at a temperature 30°C or more higher than boiling points of a solvent and an unreacted material at an operating pressure of the finisher 14) and under reduced pressure (less than 1 atm, preferably 10 to 500 torr). At this time, gas phase flow (i.e., vaporized flow) 201 of hydrocarbons separated together with water from a final product in the finisher 14 is all liquefied by using one or more heat exchangers 20, suitably two or more heat exchangers 20, and liquefied flow 203 is pressurized 24 by using a pump 24, and then pressurized flow 204 is introduced into a liquid-liquid separator 30. In addition, at the time of the introduction into the liquid-liquid separator 30, heating may be performed up to a suitable temperature (40 to 50°C) in order to prevent water from freezing, in which case a liquid-liquid separator or gas-liquid-liquid separator 30 may be used. In addition, components having relatively low boiling points in the gas-liquid-liquid separator may be removed by gas phase flow. After water and hydrocarbons are separated in the liquid-liquid separator 30, flow 214 having a relatively large amount of water is either treated as wastewater, or treated with a filter and then recirculated 2 to a finisher, and flow 215 having a relatively large amount of hydrocarbons is pressurized using a pump 31 to remove a trace amount of moisture in an adsorption column 10, and flow 106 of 0.1 ppm or less is introduced into a primary distillation column 15 of an SRU process of POE.

FIG. 4 is a flowchart of a hydrocarbon recovery process in the finisher 14 used as a Comparative Example of the present invention. FIG. 4 differs from FIG. 3 in that gas phase flow 201 of hydrocarbons separated together with water from a final product in the finisher 14 is partially liquefied by using one or more heat exchangers 20, suitably using two or more heat exchangers 20, and partially liquefied flow is introduced into a gas-liquid separator 23 such that gas phase flow 205 of the gas-liquid separator 23 is sent to a flare stack or fully oxidized and discharged into the atmosphere, and liquid phase flow 209 of the gas-liquid separator 23 is pressurized by using a pump 24 and pressurized flow 210 is introduced into a liquid-liquid separator 30.

FIG. 5 is a flowchart of a hydrocarbon recovery process in the finisher 14 used as a Comparative Example of the present invention. FIG. 5 differs from FIG. 2 in that only one compressor 21 is used to pressurize gas phase flow 201 of hydrocarbons separated together with water from a final product in the finisher 14, and pressurized flow 203 is partially liquefied 22, and subsequent flow in a gas-liquid separator 23 is as shown in FIG. 4.

FIG. 6 is a flowchart of a hydrocarbon recovery process in the finisher 14 used as a Comparative Example of the present invention. FIG. 6 differs from FIG. 4 in that one compressor 21 is further used to recover hydrocarbons from gas phase flow 205 of the gas-liquid separator 23.

Since FIGS. 4 to 6 will be clearly understood by those skilled in the art with reference to differences from the above description and to experiments to be described later, so that additional descriptions thereof will be omitted.

Table 1 below shows material resins for flow, which is the result of Aspen plus simulation for a method for recovering a solvent and an unreacted material from upper flow 201 of the finisher 14 when water is injected such that the amount of water injected into the finisher 14 is 10% by mass of a final polyolefin elastomer, in the flowcharts of a polyolefin elastomer having a 1-octene content of 35 wt% in Examples 1 (FIG. 2), Example 2 (FIG. 3), and Comparative Examples 1 to 3 (FIGS. 4 to 6, respectively), which are EOR cases.

**Table 1. Material resins of Examples and Comparative Examples**

| | | | Example 1 (FIG. 2) | | Example 2 (FIG. 3) | | Comparative Example 1 (FIG. 4) | | Comparative Example 2 (FIG. 5) | | Comparative Example 3 (FIG. 6) | |
|---|---|---|---|---|---|---|---|---|---|---|---|---|
| | Unit | 201 | 214 | 215 | 214 | 215 | 214 | 215 | 214 | 215 | 214 | 215 |
| Temperature | C | 200.0 | 15.0 | 15.0 | 15.0 | 15.0 | 15.0 | 15.0 | 15.0 | 15.0 | 15.0 | 15.0 |
| Pressure | Bar | 0.07 | 1.30 | 1.30 | 1.10 | 1.10 | 1.01 | 1.01 | 1.01 | 1.01 | 1.01 | 1.01 |
| Mass flow | kg/hr | 7630.5 | 3995.7 | 3630.2 | 3996.4 | 3634.0 | 3843.2 | 1556.7 | 3954.3 | 1679.8 | 3935.9. | 2194.3 |
| Mass fraction | | | | | | | | | | | | |
| ethylene | | 0.0001 | 0.0000 | 0.0000 | 0.0002 | 0.0000 | 0.0000 | 0.0000 | 0.0000 | 0.0000 | 0.0000 | 0.0000 |
| ethane | | 0.0000 | 0.0000 | 0.0000 | 0.0000 | 0.0000 | 0.0000 | 0.0000 | 0.0000 | 0.0000 | 0.0000 | 0.0000 |
| cyclohexane | | 0.0031 | 0.0000 | 0.0066 | 0.0000 | 0.0066 | 0.0000 | 0.0001 | 0.0000 | 0.0000 | 0.0000 | 0.0032 |
| n-hexane | | 0.1828 | 0.0000 | 0.3824 | 0.0000 | 0.3838 | 0.0000 | 0.0032 | 0.0000 | 0.0000 | 0.0000 | 0.1367 |
| methylcyclohexane | | 0.0610 | 0.0000 | 0.1282 | 0.0000 | 0.1281 | 0.0000 | 0.0037 | 0.0000 | 0.0000 | 0.0000 | 0.1034 |
| 2-methyl-pentane | | 0.0030 | 0.0000 | 0.0062 | 0.0000 | 0.0062 | 0.0000 | 0.0000 | 0.0000 | 0.0000 | 0.0000 | 0.0017 |
| 3-methyl-pentane | | 0.0052 | 0.0000 | 0.0108 | 0.0000 | 0.0108 | 0.0000 | 0.0001 | 0.0000 | 0.0000 | 0.0000 | 0.0032 |
| methylcyclohexane | | 0.0004 | 0.0000 | 0.0008 | 0.0000 | 0.0008 | 0.0000 | 0.0000 | 0.0000 | 0.0000 | 0.0000 | 0.0007 |
| allylcyclopentane | | 0.0032 | 0.0000 | 0.0067 | 0.0000 | 0.0067 | 0.0000 | 0.0108 | 0.0000 | 0.0000 | 0.0000 | 0.0102 |
| 1-octene | | 0.2144 | 0.0000 | 0.4506 | 0.0000 | 0.4502 | 0.0000 | 0.9792 | 0.0000 | 0.0000 | 0.0000 | 0.7320 |
| 2-octene | | 0.0001 | 0.0000 | 0.0003 | 0.0000 | 0.0003 | 0.0000 | 0.0007 | 0.0000 | 0.0000 | 0.0000 | 0.0005 |
| n-propylcyclopentane | | 0.0004 | 0.0000 | 0.0009 | 0.0000 | 0.0009 | 0.0000 | 0.0015 | 0.0000 | 0.0000 | 0.0000 | 0.0014 |
| n-octane | | 0.0025 | 0.0000 | 0.0052 | 0.0000 | 0.0052 | 0.0000 | 0.0005 | 0.0000 | 0.0000 | 0.0000 | 0.0069 |
| hydrogen | | 0.0000 | 0.0000 | 0.0000 | 0.0000 | 0.0000 | 0.0000 | 0.0000 | 0.0000 | 0.0000 | 0.0000 | 0.0000 |
| water | | 0.5238 | 0.9999 | 0.0002 | 0.9998 | 0.0002 | 1.0000 | 0.0001 | 1.0000 | 0.0000 | 1.0000 | 0.0001 |

Table 2 is a comparison of utilities in Examples 1 and 2 (FIGS. 2 and 3) and Comparative Examples 1 to 3 (FIGS. 4 to 6) when process simulation is performed as shown in Table 1. The utility calculates with the efficiency of a pump of 60% and the efficiency of a compressor of 72%. Example 2-1 is a utility usage in a method of using two heat exchangers 20 by dividing the upper flow 201 of the finisher 14 into cooling water and a cooling medium when condensing the flow in order to reduce the capacity of a refrigerator.

**Table 2. Utilities of Examples and Comparative Examples**

| Classifications | Unit | Example 1 | Example 2 | Example 2-1 | Comparative Example 1 | Comparative Example 2 | Comparative Example 3 |
|---|---|---|---|---|---|---|---|
| Hydrocarbon recovery rate | % | 99.87% | 99.98% | 99.98% | 42.83% | 46.22% | 60.38% |
| Utility | Gcal/hr | | | | | | |
| Cooling water | Gcal/hr | 2.43 | | 0.54 | | 0.54 | |
| Brine | Gcal/hr | 1.21 | | | 3.12 | 2.91 | 3.12 |
| Chilling Medium | Gcal/hr | | 3.66 | 3.13 | | | |
| Electricity | KW | 373.87 | 1.28 | 1.28 | 0:61 | 373.42 | 17.41 |

Referring to Table 1, in Examples 1 and 2, the hydrocarbon recovery rate is 99% or greater, so that the amount of hydrocarbons lost is very small, and the amount of hydrocarbons contained in water is 1000 ppmwt or less, which is very small, and thus, when the hydrocarbon are recirculated to the finisher 14, the amount of waste water may be reduced. However, in Comparative Examples 1 to 3, although a considerable amount of water may be recirculated and used, there is a significant loss of hydrocarbons with a hydrocarbon recovery rate of about 60%, and most of fluids lost are a solvent and 1-octene.

### Description of symbols

1: Feedstock
2: Water
3: Product
4: Ethylene purge
5: Purge
6: Heavy matters
7: Ethylene and 1-butene purge
10: Adsorption tower
11: Primary devolatilizer
12: Secondary devolatilizer
13: Flash drum
14: Finisher
15: Primary distillation column
16: Secondary distillation column
17: Tertiary distillation column
20, 22, 25, 24, 27: Heat exchanger
24, 29, 31: Pump
21, 26: Compressor
30: Two liquid separators
23, 28: Gas-liquid separator
101: Reactor injection flow
102: Primarily devolatilized circulation flow
103: Impurity removal flow
104: Secondarily devolatilized circulation flow
105: Discharge flow with water of finisher removed
106: Flow after passing through adsorption tower
107(107A, 107B, 107C): Primarily distilled upper flow
108: Secondarily distilled upper flow
109(109A, 109B, 109C): Secondarily distilled lower flow
110: n-hexane-containing flow
111: Primarily distilled lower flow
112(112A, 112B, 112C): C6s flow
113: Purge flow
114: 1-octene-containing flow
115: Heavy matters-containing flow
116: Reactor recirculation flow
117: Primary devolatilization preparation flow
118: Secondary devolatilization preparation flow
119: Primary distillation column injection flow
201: Finisher gas phase flow
212: Purge flow
214: Liquid-liquid separator water rich flow
215: Liquid-liquid separator hydrocarbon rich flow

## Claims

1. A method for recovering a solvent and an unreacted material in a finisher for a polyolefin elastomer preparation process, the method comprising:
a first step of injecting water into a finisher (14) to vaporize the water at a high temperature and a low pressure, thereby removing a solvent and an unreacted material from a polyolefin elastomer;
a second step of liquefying all of flow (201) vaporized in the finisher (14);
a third step of separating the liquefied flow into water and hydrocarbons by using a liquid-liquid separator (30);
a fourth step of removing moisture in the separated hydrocarbons through an adsorption column (10); and
a fifth step of transferring the hydrocarbons from which the moisture is removed to a distillation column (15).

2. The method of claim 1, wherein the second step comprises the steps of:
cooling the flow (201) vaporized in the finisher (14);
pressurizing flow (202) cooled by using a first compressor (21);
cooling flow (203) pressurized by the first compressor (21), and supplying the cooled flow to a first gas-liquid separator (23);
heating gas phase flow (205) of the first gas-liquid separator (23), and pressurizing liquid phase flow (209);
pressurizing, by using a second compressor (26), flow (206) separated by the first gas-liquid separator (23) and heated;
cooling flow (207) pressurized by the second compressor (26), and supplying the cooled flow to a second gas-liquid separator (28);
removing ethylene and ethane components having relatively low boiling points of the second gas-liquid separator (28) by gas phase flow (212), and pressurizing liquid phase flow (211) having a higher boiling point than the ethylene and ethane components; and
supplying flow (210) separated by the first gas-liquid separator (23) and pressurized and flow separated by second gas-liquid separator (28) and pressurized to the liquid-liquid separator (30).

3. The method of claim 1, wherein the second step comprises the steps of:
liquefying, by using one or more heat exchangers (20), the flow (201) vaporized in the finisher (14); and
pressurizing the liquefied flow (203) and supplying the pressurized flow to the liquid-liquid separator (30).

4. The method of claim 1, wherein one or more compressors or blowers are used to pressurize the flow (201) vaporized in the finisher (14).

5. The method of claim 1, wherein in the third step, when operating at a pressure higher than atmospheric pressure, or operating at a pressure below atmospheric pressure to suppress air inflow when separating water and hydrocarbons, a sealed liquid-liquid separator or a three-phase separator (gas-liquid-liquid separator) is used as the liquid-liquid separator (30).

6. The method of claim 5, wherein when the sealed liquid-liquid separator or the gas-liquid-liquid separator is used, an inert gas is injected to suppress the air inflow.

7. The method of claim 1, wherein at the time of the introduction into the liquid-liquid separator (30), heating is performed to prevent water from freezing.

8. The method of claim 7, wherein a component having a relatively low boiling point is removed by gas phase flow by using a gas-liquid-liquid separator as the liquid-liquid separator (30).

9. The method of claim 1, wherein flow (214) in which the water separated from the liquid-liquid separator (30) is rich is recirculated (2) to the finisher after solids of the flow are removed with a filter.

10. The method of claim 1, wherein the adsorption column (10) comprises at least one of molecular sieve, zeolite, and silica gel as an adsorbent.
